# EUROPÄISCHE PATENTSCHRIFT

(11) **EP 1 058 991 B1**
(45) Veröffentlichungstag und Bekanntmachung des Hinweises auf die Patenterteilung: **18.05.2005**
(21) Anmeldenummer: 99936156.1
(22) Anmeldetag: 18.02.1999
(51) Int. Cl.: H04M 1/72

(54) **FUNKGERÄT MIT FERNBEDIENUNG**
RADIO DEVICE WITH REMOTE CONTROL
APPAREIL RADIO A TELECOMMANDE

(30) Priorität: 25.02.1998 DE 19807928
(43) Veröffentlichungstag der Anmeldung: 13.12.2000
(73) Patentinhaber: Rohde & Schwarz GmbH & Co. KG, 81671 München (DE)
(72) Erfinder: ISELT, Peter, D-80997 München (DE)
(74) Vertreter: Körfer, Thomas, Dipl.-Phys.
(86) Internationale Anmeldenummer: PCT/EP1999/001055
(87) Internationale Veröffentlichungsnummer: WO 1999/044350

(56) Entgegenhaltungen:
- EP-A- 0 669 746
- EP-A- 0 800 303
- WO-A-95/35618
- DE-A- 19 521 453
- DE-C- 4 237 395
- PILGER U: "STRUKTUR DES DECT-STANDARDS" NACHRICHTENTECHNIK ELEKTRONIK, Bd. 42, Nr. 1, 1. Januar 1992 (1992-01-01), Seiten 23-29, XP002016869 ISSN: 0323-4657
- WALKER M: "SECURITY IN MOBILE AND CORDLESS TELECOMMUNICATIONS" PROCEEDINGS OF THE 6TH ANNUAL EUROPEAN CONFERENCE ON COMPUTER SYSTEMS AND SOFTWARE ENGINEERING (COMPEURO), THE HAGUE, MAY 4 - 8, 1992, 4. Mai 1992 (1992-05-04), Seiten 493-496, XP000344244ISBN: 0-8186-2760-3

## Beschreibung

Die Erfindung betrifft ein Funkübertragungssystem laut Oberbegriff des Hauptanspruches.

Es ist bekannt, stationäre oder in Fahrzeuge installierte Funkgeräte wie Kurzwellen-Sende-Empfangs-Geräte über örtlich einige Meter oder auch weiter entfernt abgesetzte Fernbediengeräte zu bedienen, deren Zustand zu überwachen und die Sende-/Empfangsinformation zu übertragen. Dazu ist am Funkgerät eine entsprechende Schnittstelle für eine Kabelverbindung zwischen Funkgerät und Fernbedienungsgerät vorgesehen.

Bei Funkübertragungssystemen, die mit solchen fernbedienbaren Funkgeräten arbeiten, besteht zunehmend die Forderung nach einer freien Beweglichkeit des Benutzers im Raum oder im Gelände, ohne über Kabel od.dgl. an das Funkgerät angebunden zu sein. Diese Forderung besteht inbesondere bei hochmobilen Anwendungen, wie taktischen militärischen Einsätzen oder sonstigen spontanen Aktionen wie Rettungs- und Noteinsätzen.

Im Telefonbereich ist es bei den sogenannten Schnurlos-Telefonen bekannt, ein bewegliches Handgerät über eine Funkverbindung mit einem Basisgerät zu verbinden (deutsche Patentschrift 42 37 395). Über diese Funkstrecke können nicht nur die Sprachinformationen übertragen werden, sondern auch Programmierparameter für das Basisgerät. Damit können beispielsweise an ein elektrisches Gerät, z.B. eine Waschmaschine, entsprechende Steuerbefehle übertragen werden bzw. von diesem elektrischen Gerät entsprechende Zustandsinformationen abgefragt werden, indem an diesem Gerät eine entsprechende Sende/Empfangs-Einrichtung angeordnet wird, die mit der Telefonzentrale verbunden ist (EP 0800 303) Diese für Telefonanlagen entwickelte Anordnung ist für die hohen Anforderungen bei Funkgeräten mit einer Vielzahl von komplexen Bedienfunktionen nicht geeignet, zumal bei Funkgeräten gleichzeitig auch noch die Informationen übertragen werden müssen.

Es ist daher Aufgabe der Erfindung, ein Funkübertragungssystem aufzuzeigen, mit dem die oben erwähnte Forderung nach freier Beweglichkeit des Benutzers auch bei solchen Funkgeräten mit hoher Anforderung an die Bedienfunktionen erfüllt werden kann.

Diese Aufgabe wird ausgehend von einem Funkübertragungssystem laut Oberbegriff des Hauptanspruches durch dessen kennzeichnende Merkmale gelöst. Vorteilhafte Weiterbildungen ergeben sich aus den Unteransprüchen.

Gemäß der Erfindung wird sowohl für die Übertragung der Bedienfunktionen als auch für die Informationsübertragung zwischen einem abgesetzten Fernbediengerät und dem eigentlichen Funkgerät eine an sich bekannte Funkstrecke benutzt, die jedoch zusätzlich noch zur Sicherung einer fehlerfreien Übertragung entsprechende Schutzmaßnahmen aufweist. Damit kann auch ein solches Funkgerät, das eine Vielzahl von komplexen Bedienfunktionen besitzt und das zur Informationsübertragung in einem komplexen Funkübertragungssystem, beispielsweise in einem Kurzwellenübertragungssystem, benutzt wird, vom Benutzer ferngesteuert und fernüberwacht werden und der Benutzer kann sich trotzdem frei im Raum oder Gelände bewegen.

Da bei dem erfindungsgemäßen System das abgesetzte mobile Fernbediengerät nicht wie bei den bekannten Schnurlos-Telefonanlagen (EP 0800 303) über eine zwischengeschaltete Zentrale, sondern direkt mit dem Funkgerät verbunden ist, ist dieses System auch extrem betriebssicher und kann nicht durch Ausfall der Zentrale lahmgelegt werden.

Durch die zusätzlichen Schutzmaßnahmen bei der Funkübertragung wird gewährleistet, daß unberechtigte Personen nicht in das Bedien- und Informationsübertragungs-System eindringen können.

Die erfindungsgemäße Maßnahme ist sowohl für eine Übertragung von Sprache als auch von anderen Daten, möglicherweise sogar im Zeitmultiplex, geeignet. Beim erfindungsgemäßen Funkgerät verbleiben die eigentlichen komplexen Einrichtungen zum Einstellen der Sende- und Empfangsfunktionen sowie zum Aufbau der Verbindung im eigentlichen Funkgerät und lediglich die Bedien- und Überwachungsbefehle werden zusammen mit den Sprach- oder Dateninformationen über die Fernbedien-Funkstrecke ausgetauscht.

Die Fernbedien-Funkstrecke ist bezüglich der Wahl der Übertragungsfrequenz, der Leistung und der eventuell angewandten Codierung und der Datenrate so ausgelegt, daß hierdurch eine sichere Übertragung über eine Entfernung von einigen hundert Metern möglich ist und die Sicherheit der Übertragung nicht wesentlich schlechter wird als für das Gesamtsystem gefordert wird. Dies wird beispielsweise dadurch erreicht, daß wahlweise oder gleichzeitig ein entsprechendes Leistungsmanagement für die Funkstrecke eingesetzt wird, ein gesichertes Übertragungsprotokoll für die Informationsübertragung, beispielsweise ARQ, benutzt wird oder eine Bandspreizung angewendet wird. Zum Schutz der Steuer-, Überwachungs- und Informationsdaten ist eine Verschlüsselung auf der Fernbedien-Funkstrecke möglich.

Die Erfindung wird im Folgenden anhand einer schematischen Zeichnung an einem Ausführungsbeispiel näher erläutert.

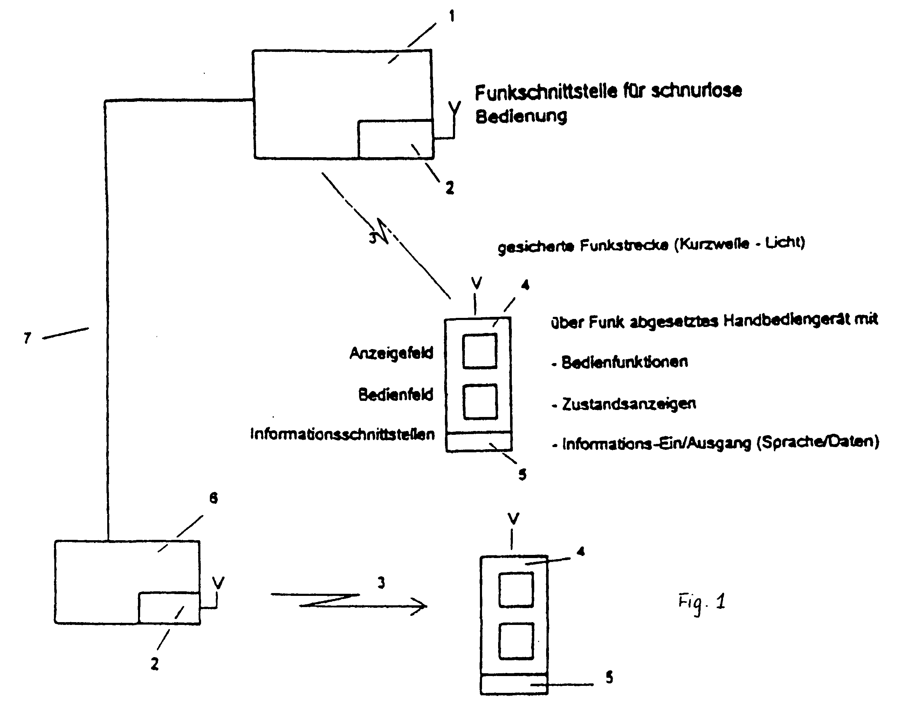

Die Figur zeigt ein übliches stationäres oder semi-mobiles Funkgerät 1, das eine Vielzahl von komplexen Funktionen besitzt und zur Übertragung von Informationen in einem komplexen Funkübertragungssystem, beispielsweise einem Kurzwellenübertragungssystem, geeignet ist. An dem Funkgerät 1 ist eine Schnittstelle 2 für eine drahtlose Verbindung über eine Fembedien-Funkstrecke 3 vorgesehen, über welche das Funkgerät 1 mit einem örtlich abgesetzten Fernbedienungsgerät 4 drahtlos verbunden ist. Die Übertragungsfrequenz dieser Funkstrecke 3 ist angepaßt an das operationelle Szenario, sie kann zwischen einer Kurzwellenverbindung bis zu einer Verbindung über optisches Licht (Infrarot) gewählt werden. Das Fernbedienungsgerät 4 ist über eine Batterie gespeist, es besitzt ein Anzeigefeld für die Bedienfunktionen des Funkgerätes 1 und ein entsprechendes Bedienfeld, mit dem vom Benutzer die einzelnen Bedienfunktionen des Funkgerätes eingestellt werden können. Außerdem ist eine Zustandsanzeige des Funkgerätes über das Anzeigefeld möglich. Zusätzlich ist eine Schnittstelle 5 für die Ein- und Ausgabe der über das Funkgerät zu übertragenden Information vorgesehen, bei der es sich beispielsweise um Sprache oder sonstige digitale Daten handeln kann. Über die Funkstrecke 3 wird also nicht nur das abgesetzte Funkgerät 1 bedient und überwacht, sondern es werden über diese Funkstrecke auch die eigentlichen Informationen zum Handgerät 4 übertragen.

Auf der Funkstrecke 3 sind zusätzliche Schutzmaßnahmen zur Sicherung einer fehlerfreien Übertragung der Bedien- und Informationsdaten vorgesehen. Die Funkstrecke 3 ist z.B. mit einer geeigneten Kanalcodierung ausgestattet und die Datenübertragung erfolgt nach einem geeigneten bekannten Übertragungsprotokoll. Außerdem können Maßnahmen zur Codierung und Verschlüsselung der übertragenen Daten vorgesehen sein, die auch ein Eindringen von unberechtigten Personen in die Übertragungsstrecke verhindern. Außerdem können noch Maßnahmen zum Schutz gegen Störungen von außen getroffen werden, beispielsweise durch entsprechende Signalspreizung (Anwendung eines geeigneten Frequenzsprungverfahrens oder anderer Codiermaßnahmen).

Wenn das Funkgerät 1 bereits ein Fernbediengerät 6 aufweist, das über ein Kabel 7 mit dem eigentlichen Funkgerät 1 verbunden ist, so kann auch an diesem bereits abgesetzten Fernbediengerät 6 eine entsprechende Schnittstelle 2 vorgesehen sein, über welche eine drahtlose Fembedien-Funkstrecke 3 zu einem entsprechenden Fernbediengerät 4 herstellbar ist, wobei auch in diesem Fall wieder über eine Schnittstelle 5 die Ein- und Ausgabe der über das Funkgerät 1 zu übertragenden Information vorgesehen ist. Auch dabei werden über die Funkstrecke 3 also nicht nur die Fernsteuer- und Femüberwachungsdaten, sondern auch die Informationen übertragen.

## Patentansprüche

1. Funkübertragungssystem, insbesondere Kurzwellenübertragungssystem, mit einem Funkgerät (1), an dem über eine Fernbedien-Schnittstelle (2) eine Vielzahl von Sender- und Empfangsfunktionen einstellbar sind,
**dadurch gekennzeichnet,**
**daß** die Fernbedien-Schnittstelle (2) des Funkgerätes (1) über eine Funkstrecke (3) direkt mit einem abgesetzten mobilen Fernbediengerät (4) verbunden ist, über welches die Bedienfunktionen des Funkgerätes (1) fernsteuerbar und
die Betriebzustände des Funkgerätes (1) fernüberwachbar sind,
**daß** am Fernbediengerät (4) eine Einrichtung (5) zur Ein- und Ausgabe der zu übertragenden Informationen vorgesehen ist,
und **daß** die Funkstrecke (3) Schutzeinrichtungen zur Sicherung einer fehlerfreien Übertragung der Bedienfunktionen und der Informationen aufweist.

2. Funkübertragungssystem nach Anspruch 1,
**dadurch gekennzeichnet,**
**daß** die Funkstrecke (3) eine zur fehlerfreien Übertragung geeignete Kanalcodierung aufweist.

3. Funkübertragungssystem nach Anspruch 1 oder 2,
**dadurch gekennzeichnet,**
**daß** die Übertragung der Bedienfunktions- und Informations-Daten auf der Funkstrecke (3) nach einem datensichernden Übertragungsprotokoll erfolgt.

4. Funkübertragungssystem nach einem der vorhergehenden Ansprüche,
**dadurch gekennzeichnet,**
**daß** die auf der Funkstrecke (3) übertragenen Bedienfunktions- und Informations-Daten abhörsicher verschlüsselt sind.

5. Funkübertragungssystem nach einem der vorhergehenden Ansprüche, bei dem das Funkgerät (1) über Kabel (7) mit einem abgesetzten stationären oder semimobilen Fernbediengerät (6) verbunden ist, das eine Fernbedien-Schnittstelle (2) aufweist,
**dadurch gekennzeichnet,**
**daß** das mobile Fernbediengerät (4) über die Funkstrecke (3) mit dieser Schnittstelle (2) des stationären oder semimobilen Fernbediengerätes (6) verbunden ist und am mobilen Fernbediengerät (4) eine Einrichtung (5) zur Ein- und Ausgabe der zu übertragenden Informationen vorgesehen ist.

6. Funkübertragungssystem nach einem der vorhergehenden Ansprüche,
**dadurch gekennzeichnet,**
**daß** das mobile Fernbediengerät (4) als batteriegespeistes Handgerät ausgebildet ist, das eine freie Beweglichkeit des Benutzers ermöglicht.

## Claims

1. Radio transmission system, especially short-wave transmission system, with a radio device (1), in which a plurality of transmission and reception functions can be adjusted via a remote-control interface (2),
**characterised in that**
the remote-control interface (2) of the radio device (1) is connected directly via a radio link (3) to a distant, mobile remote-control device (4), by means of which the remote functions of the radio device (1) can be remotely controlled and the operational conditions of the radio device (1) can be remotely monitored;
that a device (5) is provided in the remote-control device (4) for the input and output of the information to be transmitted;
and that the radio link (3) provides protective devices to ensure an error-free transmission of the control functions and the information.

2. Radio transmission system according to claim 1,
**characterised in that**
the radio link (3) provides a channel coding suitable for error-free transmission.

3. Radio transmission system according to claim 1 or 2,
**characterised in that**
control-function data and information data on the radio link (3) are transmitted according to a data-securing transmission protocol.

4. Radio transmission system according to any one of the preceding claims,
**characterised in that**
the control-function data and information data transmitted on the radio link are coded to prevent unauthorised access.

5. Radio transmission system according to any one of the preceding claims, wherein the radio device (1) is connected by cable (7) to a distant, stationary or semi-mobile remote-control device (6), which provides a remote-control interface (2),
**characterised in that**
the mobile remote-control device (4) is connected to this interface (2) of the stationary or semi-mobile remote-control device (6) via the radio link (3); and that a device (5) is provided in the mobile remote-control device (4) for the input and output of the information to be transmitted.

6. Radio transmission system according to any one of the preceding claims,
**characterised in that**
the mobile remote-control device (4) is designed as a battery-operated, handheld device, which allows a free movement of the user.

## Revendications

1. Système de radiotransmission, en particulier système de transmission à ondes courtes, avec un appareil radio (1) auquel, par une interface de commande à distance (2), une pluralité de fonctions d'émission et de réception peut être réglée,
**caractérisé**
**en ce que** l'interface de commande à distance (2) de l'appareil radio (1) est reliée par une ligne hertzienne (3) directement à un appareil de commande à distance mobile initié (4) par lequel les fonctions de commande de l'appareil radio (1) peuvent être commandées à distance et les états de fonctionnement de l'appareil radio (1) peuvent être surveillés à distance,
**en ce qu'**il est prévu à l'appareil de commande à distance (4) une installation (5) pour l'entrée et l'émission des informations à transmettre,
et **en ce que** la ligne hertzienne (3) présente des installations de protection pour assurer une transmission sans défaut des fonctions de commande et des informations.

2. Système de radiotransmission selon la revendication 1, **caractérisé en ce que** la ligne hertzienne (3) présente un codage de canal approprié à une transmission sans défaut.

3. Système de radiotransmission selon la revendication 1 ou 2, **caractérisé en ce que** la transmission des données de fonctions de commande et d'informations a lieu sur la ligne hertzienne (3) selon un protocole de transmission sécurisant les données.

4. Système de radiotransmission selon l'une des revendications précédentes, **caractérisé en ce que** les données des fonctions de commande et d'informations transmises sur la ligne hertzienne (3) sont codées pour être sécurisées à l'encontre d'une écoute.

5. Système de radiotransmission selon l'une des revendications précédentes, où l'appareil radio (1) est relié par des câbles (7) à un appareil de commande à distance stationnaire ou semi-mobile initié (6), qui présente une interface de commande à distance (2),
**caractérisé**
**en ce que** l'appareil de commande à distance mobile (4) est relié par la ligne hertzienne (3) à cette interface (2) de l'appareil de commande à distance stationnaire ou semi-mobile (6), et qu'il est prévu à l'appareil de commande à distance mobile (4) une installation (5) pour l'entrée et l'émission des informations à transmettre.

6. Système de radiotransmission selon l'une des revendications précédentes, **caractérisé en ce que** l'appareil de commande à distance mobile (4) est réalisé comme appareil portatif alimenté par une batterie, qui permet une libre mobilité de l'utilisateur.
